# NEUE EUROPÄISCHE PATENTSCHRIFT

(11) **EP 0 998 614 B2**
(45) Veröffentlichungstag und Bekanntmachung des Hinweises auf die Entscheidung über den Einspruch: **15.09.2004**
(45) Hinweis auf die Patenterteilung: 12.09.2001
(21) Anmeldenummer: 98942562.4
(22) Anmeldetag: 17.07.1998
(51) Int. Cl.: E06B 9/17

(54) **Vorgefertigter Rolladenkasten sowie Verfahren zur Herstellung desselben**
Prefabricated roller shutter box and method for producing it
Caisson de volet roulant préfabriqué et son procédé de fabrication

(30) Priorität: 19.07.1997 DE 19731073
(43) Veröffentlichungstag der Anmeldung: 10.05.2000
(73) Patentinhaber: Wiehofsky, Fritz, 86938 Schondorf (DE)
(72) Erfinder: Wiehofsky, Fritz, 86938 Schondorf (DE)
(74) Vertreter: Ernicke, Hans-Dieter, Dipl.-Ing.
(86) Internationale Anmeldenummer: PCT/EP1998/004417
(87) Internationale Veröffentlichungsnummer: WO 1999/004115

(56) Entgegenhaltungen:
- EP-B- 0 114 965
- DE-A- 3 444 816
- DE-A- 4 032 769
- DE-C- 3 519 752
- DE-U- 7 822 193
- DE-U- 29 504 108
- DE-U- 29 520 790
- DE-U- 29 622 964
- US-A- 3 289 371
- US-A- 4 159 361
- US-A- 4 606 168

## Beschreibung

Die Erfindung betrifft ein Herstellungsverfahren und einen Rolladenkasten für verputzbare Außen- und Innenwände, das die Merkmale im Oberbegriff des Hauptanspruchs aufweist.

Die US-A-4,606,168 zeigt ein Bauelement nebst Herstellungsverfahren. Das Bauelement besteht aus faserhaltigen Wärmedämmplatten, die mit Plattendübeln auf dem Mauerwerk befestigt werden. Der Putz wird direkt auf die Wärmedämmplatten aufgetragen, wobei die gelochten Platten der Dübel als Putzträgerwirken, in deren Öffnungen sich der Putz verkrallt. Der Putz besteht aus zwei Schichten, einem Unterputz und einem Oberputz, die beide als Zementbeschichtung ausgebildet sind. Der Unterputz kann zusätzlich synthetische Bindemittel und Fasern beinhalten und bildet eine elastische Putzschicht. Der Oberputz kann ebenfalls ein synthetisches Bindemittel sowie Farbpigmente, Glimmer oder andere Dekorelement enthalten.

Ein Rolladenkasten ist aus dem DE-G 78 22 193 bekannt. Der Putzträger besteht aus einem Glasfasergewebe, das auf der Außenwand des Rolladenkastens angeheftet wird. Anschließend wird eine Kunststoffdispersion aufgebracht, die den Kasten und das Gewebe zusätzlich verklebt. In die Oberfläche der Dispersion kann zusätzlich körniges Material eingebracht werden.

Aus dem DE-G 295 04 108 ist eine Wandverkleidung für Innenräume bekannt, bei der eine faserhaltige Spritzschicht als Tapetenersatz dient. Die Spritzschicht soll schalldämmende Eigenschaften haben und muß dazu entsprechend weich sein. Die bekannte Wandverkleidung ist nicht zum Verputzen vorgesehen und dafür auch nicht geeignet.

Es ist Aufgabe der vorliegenden Erfindung, ein Herstellungsverfahren bzw. einen verputzbaren Rolladenkasten mit besseren Eigenschaften aufzuzeigen.

Die Erfindung löst diese Aufgabe mit den Merkmalen im Hauptanspruch.
Die erfindungsgemäße Beschichtung besteht aus einem innigen Gemisch eines Bindemittels, vorzugsweise einer Dispersion, mit kurzen geschnittenen Fasern, das in flüssiger oder pasteuser Form aufgebracht wird. Die Beschichtung bildet selbst den Putzträger für einen später aufzutragenden Putz und hat dazu eine entsprechende Dicke. Die eingebetteten Fasern versteifen in Verbindung mit der Dispersion die Beschichtung, so daß sich eine zähelastische und dabei harte und stabile Tragschicht bildet. Die Beschichtung ist selbsttragend und braucht kein Glasfasergewebe oder dergleichen als Stütze. Dadurch verringert sich der Material-, Bearbeitungs- und Kostenaufwand.

Durch die Eigenstabilität der Beschichtung kann beim Rolladenkasten zumindest teilweise auf Stützplatten verzichtet werden. Die Beschichtung wird dann direkt auf die relativ weiche Dämmschicht aufgebracht. Sie bildet eine zusammenhängende stabile Hülle, die im Vergleich mit den üblichen Stützplatten aus Holz, Hartfaser oder dergleichen eine geringe Dicke hat. Dies kommt der Wärmedämmung zugute, weil bei gegebenen Außenabmessungen die Dämmschicht entsprechend dikker werden kann.

Die eingebetteten Fasern und die Form des Auftrags verleihen der Beschichtung eine große Oberflächenrauhigkeit, die sich in einer verbesserten Putzhaftung niederschlägt. Durch die Einbettung der Fasern und die Gemischbildung ist die Oberflächenrauhigkeit auch größer als bei der vorbekannten Dispersion, bei der lediglich körniges Material in die Oberfläche eingebracht ist. Ein körniges Material vermittelt keine so große Putzhaftung und kann durch den reinen Oberflächenauftrag auch relativ leicht aus dem Verbund mit der Dispersion gelöst werden. Die erfindungsgemäße Beschichtung hat hier bessere und stabilere Eigenschaften.

Die erfindungsgemäße Beschichtung bildet zumindest weitgehend wasserundurchlässige Abdekkung oder Umhüllung des Rolladenkasten. Sie schützt die empfindliche Dämmschicht vor chemischen und physikalischen Umwelteinflüssen und auch vor mechanischer Beschädigung. Die Beschichtung hat außerdem den Vorteil, daß sie gegenüber dem später aufgetragenen Putz weitestgehend inert ist und sich insbesondere nicht dehnt oder schrumpft. Putzrisse wie bei vorbekannten Putzträgern werden dadurch mit größerer Sicherheit vermieden.

Die erfindungsgemäße Beschichtung hat durch die Dispersion, die Wahl der Fasern und die innige Durchmengung der Bestandteile ein sehr gutes Trokkenverhalten. Sie bildet sehr schnell nach dem Auftrag eine harte, rauhe und stablle putztragende Schicht auf der Oberfläche des Rolladenkasten. Von weiterem Vorteil ist, daß die Beschichtung, insbesondere einer aufgespritzten Beschichtung, eine weite Bandbreite von Dekormöglichkeiten eröffnet. Diese Dekors können zur Verzierung, aber auch zur Kennzeichnung, Werbung oder zu sonstigen beliebigen Zwecken eingesetzt werden. Sie sind ohne großen Aufwand und Zusatzkosten erhältlich.

Die Beschichtung kann auch mit einem Stützgitter kombiniert werden.

In den Unteransprüchen sind weitere vorteilhafte Gestaltungen der Erfindung angegeben.

Die Erfindung ist in den Zeichnungen beispielsweise und schematisch dargestellt. Im einzelnen zeigen:

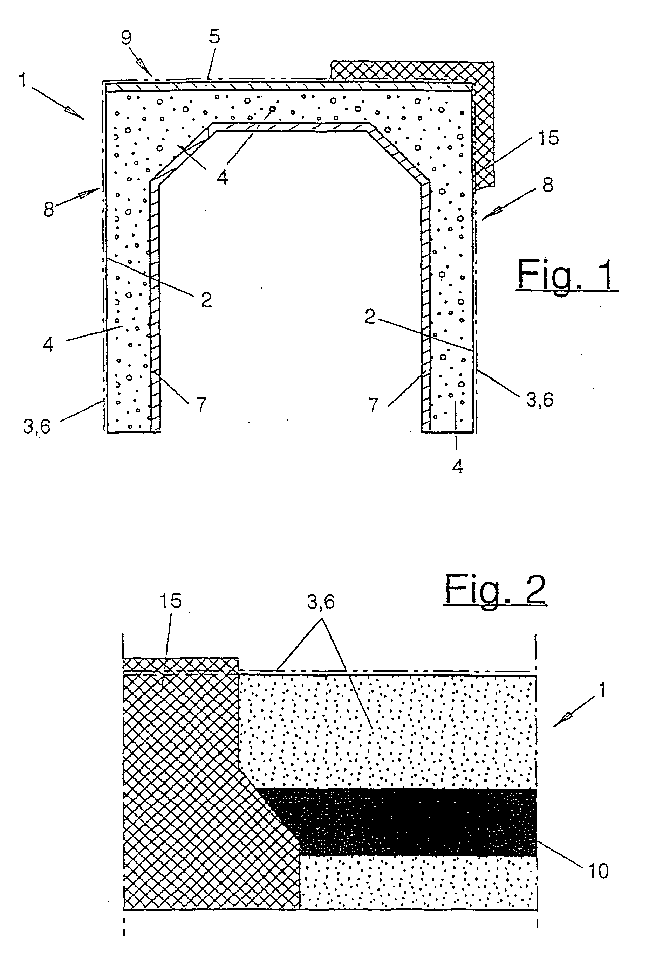

- Figuren 1 und 2:: einen Rolladenkasten mit Beschichtung im Querschnitt und in einer abgebrochenen Seitenansicht;

In den Zeichnungen ist ein Rolladenkasten (1) dargestellt. Der Rolladenkasten (1) ist für verputzbare Außenund Innenwände vorgesehen. Er besitzt zumindest an einer seiner Außenseiten einen Putzträger (3), der einen guthaftenden Untergrund für einen geeigneten Innen- oder Außenputz (15) bietet.

Der Putzträger (3) wird in den gezeigten Ausführungsbeispieten von einer Beschichtung (6) gebildet. Diese umgibt oder bedeckt den Rolladenkasten (1) an ein oder mehreren Seiten. Der Rolladenkasten (1) hat mindestens eine Grundplatte (4) und kann mehrere zusätzliche Lagen aufweisen.

Die Beschichtung (6) besteht aus einem innig durchmengten Gemisch aus einem Bindemittel und kurzen, geschnittenen Fasern. Das Bindemittel ist vorzugsweise eine Dispersion, insbesondere eine Kunststoffdispersion. Das Gemisch wird in flüssiger oder pasteuser Form auf die Oberfläche des Rolladenkasten (1) aufgebracht, trocknet schnell und härtet dabei aus. Nach dem Aushärten bildet die Beschichtung (6) eine rauhe, harte und stabile putztragende Schicht. Diese Schicht ist zudem zähelastisch und hat eine gewisse Flexibilität.

Eine Dispersion hat den Vorteil, daß die Beschichtung sehr schnell abbindet und aushärtet. Dies sorgt für die in einem industriellen Hersteilungsverfahren wichtigen kurzen Prozeßzeiten. Alternativ kann das Bindemittel ansonsten auch aus anderen Materialien, z. B. Kunstharzen, mineralischen Massen, Wasserglas oder dgl. bestehen.

Der Auftrag der Beschichtung (6) kann in beliebig geeigneter Weise erfolgen. Vorzugsweise wird die Beschichtung (6) mit Druckluft aufgespritzt. Sie kann altemativ aber auch aufgestrichen, gerakelt, gewalzt oder in sonstiger Weise aufgebracht werden. Der Auftrag der Beschichtung kann z.B. auch durch Flachdrücken einer wurstförmigen Materialanhäufung etc. erfolgen.

Die Beschichtung (6) beinhaltet vorzugsweise einen hohen Anteil von Naturfasern. Vorzugsweise handelt es sich dabei um Baumwollfasern. Es können aber auch Fasern aus Flachs, Hanf oder dergleichen sein. Naturfasern sind besonders kostengünstig und als nachwachsender Rohstoff umweltfreundlich.

Alternativ oder zusätzlich kann die Beschichtung (6) auch Fasern aus Kunststoff, Mineralien oder anderen geeigneten Materialien aufweisen. Die Fasern sind vorzugsweise alkalifest und dazu entsprechend ausgerüstet, d. h. mit einem geeigneten Material getränkt oder imprägniert. Die Fasern sind außerdem wasserabweisend ausgerüstet. Sie reagieren dadurch weder auf den Putz (15) noch auf Umwelteinflüsse. Insbesondere nimmt die Beschichtung (6) kein Wasser auf. Sie dehnt sich nicht und schrumpft nicht. Die Beschichtung (6) bildet eine weitestgehend wasserdichte Bedekkung oder Umhüllung des Rolladenkasten (1).

Die Dispersion kann einen gewissen Wasseranteil haben. Für die rationelle Fertigung der Rolladenkasten wird eine schnelle Trocknung angestrebt. Hierfür hat die Dispersion einen geringeren Wasseranteil als sonst üblich. Sie beinhaltet wasserbindende Härter, z. B. Isocyanat, die das eingelagerte Wasser entziehen und binden. Die Beschichtung kann z.B. unter Licht aushärten. Ferner empfiehlt es sich, die Fasern und die Dispersion mit großen Kräften und hohen Geschwindigkeiten zu mischen. Vorzugsweise geschieht dies in einem Hochfrequenzmischer, z.B. einem Dissolver. Der Auftrag der Beschichtung (6) erfolgt z.B. über einen Schneckenförderer und unter möglichst hohem Druck von z.B. ca. 15 bar. Hohe Drücke lassen sich insbesondere bei weichen Untergründen realisieren. Es kann alternativ, z.B. für harte Untergründe mit geringeren Drükken von ca. 3 bis 4 bar gearbeitet werden. Je höher die Arbeitsdrücke sind, desto besser ist die Verzahnung oder Verbindung der Beschichtung (6) mit dem Untergrund.

Die Beschichtung (6) bildet durch die innig vermengten und eingebetteten Fasern eine rauhe Oberfläche, wobei die Rauhigkeit in erwünschter Weise besonders unregelmäßig ist. Die Dicke der Beschichtung (6) kann je nach Untergrund variieren. Sie kann von wenigen 10/mm bis zu mehreren mm reichen.

Der in Figur 1 und 2 gezeigte Rolladenkasten (1) besteht z.B. aus einer stabilen Innenschale (7) und einer Dämmschicht (4). Außerdem können zumindest im Dachbereich (9) außenseitig Stützplatten (5) vorhanden sein. Die Innenschale (7) und die Stützplatten (5) können z.B. aus Holz, Hartfaser und sonstigen geeigneten Werkstoffen bestehen. Die Dämmschicht (4) besteht z.B. aus Polystyrol, einem PU-Schaum oder einem anderen geeigneten Material.

Im gezeigten Ausführungsbeispiel ist außenseitig nur im Dachbereich (9) eine Stützplatte (5) vorhanden. An den Seitenwänden (8) bildet die weiche Dämmschicht (4) die Außenhaut (2) des Rolladenkastens (1). Die Beschichtung (6) wird im Dachbereich (9) auf die Stützplatte (5) und an den Seitenwänden (8) direkt auf die Dämmschicht (4) aufgebracht. An den Seitenwänden (8) ist sie vorzugsweise dicker, um eine höhere Stabilität und Festigkeit zu bieten. In der gezeigten Ausführungsform sind alle drei Außenwände rundum mit der Beschichtung (6) versehen, die für den Rolladenkasten (1) eine stabile, feste und tragfähige Hülle bildet. Durch den Wegfall der Stützplatten an den Seitenwänden (8) können die dortigen Dämmschichten (4) bei gegebenen Außenabmessungen entsprechend dikker werden.

Wie Figur 2 verdeutlicht, kann die Beschichtung (6) ein Dekor (10) aufweisen. Hierbei kann es sich z.B. um eine zweite aufgespritzte oder in anderer Weise aufgetragene Schicht mit anderer Farbgebung, anderen Fasern oder sonstigen geeigneten Unterscheidungsmerkmalen handeln. Die Beschichtung (6) kann generell außer der Dispersion und den Fasern weitere Zuschläge enthalten. Zu Dekorzwecken können diese Zuschläge auch Farbpartikel, Glimmer oder sonstige geeignete Materialien beinhalten. Das Dekor (10) kann in beliebiger Form und Größe aufgetragen werden. Es kann sich z.B. um ein farbiges Band, aber auch eine Beschriftung oder dergleichen handeln. Das Dekor (10) kann der Verzierung, aber auch der Information dienen. Im letztgenannten Fall handelt es sich vorzugsweise um eine Beschriftung, die Materialangaben über das Bauelement, Bedienungshinweise, den Herstellernamen, Werbehinweise oder dergleichen beinhaltet.

Abwandlungen der gezeigten Ausführungsform sind in verschiedener Weise möglich. So können z.B. Stützgitter in Verbindung mit Rolladenkästen (1) eingesetzt werden. Dies kann auch in Verbindung mit Polystyrol oder anderen Materialien der Dammschicht oder Grundplatte geschehen. Das Rolladenkasten (1) muß auch keine Dämmschicht aufweisen, sondern kann eine feste und stabile Grundplatte aus Holz oder dergleichen besitzen. Die Beschichtung (6) läßt sich als Putzträger (3) in beliebiger Weise einsetzen und auch auf einen Untergrund direkt aufbringen.

### BEZUGSZEICHENLISTE

- 1: Rolladenkasten
- 2: Außenhaut, Oberfläche
- 3: Putzträger
- 4: Grundplatte, Dämmschicht
- 5: Stützplatte
- 6: Beschichtung
- 7: Innenschale
- 8: Seitenwand
- 9: Dach
- 10: Dekor
- 14: Faser
- 15: Putz

## Patentansprüche

1. Verfahren zur Herstellung eines vorgefertigten Rolladenkastens, für verputzbare Außen- und Innenwände, wobei der vorgefertigte Rolladenkasten (1) mindestens eine Grundplatte (4) und einen Putzträger (3) aufweist und für einen später auf zubringenden Putz (15) vorgesehen ist, **dadurch gekennzeichnet, daß** auf die Grundplatte (4) als Putzträger (3) eine Beschichtung (6) aus einem Gemisch aus einem Bindemittel und kurzen Fasern in flüssiger oder pastöser Form aufgetragen wird, die nach dem Abbinden eine rauhe, harte sowie stabile Tragschicht bildet.

2. Verfahren nach Anspruch 1, **dadurch gekennzeichnet, daß** als Bindemittel eine Dispersion verwendet wird.

3. Verfahren nach Anspruch 1 oder 2, **dadurch gekennzeichnet, daß** die Beschichtung (6) aufgespritzt wird.

4. Verfahren nach Anspruch 3, **dadurch gekennzeichnet, daß** die Beschichtung (6) mit einem hohen Druck von 10 bar oder mehr, vorzugsweise 15 bar oder mehr aufgespritzt wird.

5. Verfahren nach einem der Ansprüche 1 bis 4, **dadurch gekennzeichnet, daß** die Beschichtung (6) direkt auf einer Dämmschicht (4) des Rolladenkasten (1) aufgebracht wird.

6. Verfahren nach einem der Ansprüche 1 bis 5, **dadurch gekennzeichnet, daß** die Beschichtung (6) in einem Hochfrequenzmischer gemischt wird.

7. Vorgefertigter Rolladenkasten für verputzbare Außenund Innenwände, mit mindestens einer Grundplatte (4) und einem Putzträger (3) für einen später aufzubringenden Putz (15), **dadurch gekennzeichnet, daß** der Putzträger (3) eine Beschichtung (6) aufweist, die aus einem in flüssiger oder pastöser Form aufgetragenen Gemisch aus einem Bindemittel und kurzen Fasern besteht und eine rauhe, harte sowie stabile Tragschicht bildet.

8. Rolladenkasten nach Anspruch 7, **dadurch gekennzeichnet, daß** das Bindemittel als Dispersion ausgebildet ist.

9. Rolladenkasten nach Anspruch 7 oder 8, **dadurch gekennzeichnet, daß** die Beschichtung (6) als Spritzbelag ausgebildet ist.

10. Rolladenkasten nach Anspruch 7, 8 oder 9, **dadurch gekennzeichnet, daß** die Beschichtung (6) Naturfasern aus Baumwolle, Flachs, Hanf oder dgl. aufweist.

11. Rolladenkasten nach einem der Ansprüche 7 bis 10, **dadurch gekennzeichnet, daß** die Beschichtung (6) Kunststoffasern aufweist.

12. Rolladenkasten nach Anspruch 10 oder 11, **dadurch gekennzeichnet, daß** die Beschichtung (6) ein Fasergemisch aus verschiedenen Fasern aufweist.

13. Rolladenkasten nach einem der Ansprüche 7 bis 12, **dadurch gekennzeichnet, daß** die Beschichtung (6) direkt auf einer Dämmschicht (4) aufgebracht ist.

14. Rolladenkasten nach einem der Ansprüche 7 bis 13, **dadurch gekennzeichnet, daß** die Beschichtung (6) ein Stützgitter aufweist.

15. Rolladenkasten nach einem der Ansprüche 7 bis 14, **dadurch gekennzeichnet, daß** die Beschichtung (6) ein Dekor (10) aufweist.

## Claims

1. Method of producing a prefabricated roller-shutter casing for exterior and interior walls which can be plastered, a prefabricated roller-shutter casing having at least one base panel (4) and a plaster base (3) and being provided for a plaster (15) which is to be applied subsequently, **characterized in that** a coating (6) made of a mixture of a binder and short fibres is applied in liquid or pasty form to the base panel (4) as plaster base (3), the coating, once set, forming a rough, hard and stable carrying layer.

2. Method according to Claim 1, **characterized in that** a dispersion is used as the binder.

3. Method according to Claim 1 or 2, **characterized in that** the coating (6) is sprayed on.

4. Method according to Claim 3, **characterized in that** the coating (6) is sprayed on at a high pressure of 10 bar or more, preferably 15 bar or more.

5. Method according to one of Claims 1 to 4, **characterized in that** the coating (6) is applied directly to an insulating layer (4) of the roller-shutter casing.

6. Method according to one of Claims 1 to 5, **characterized in that** the coating (6) is mixed in a high-frequency mixer.

7. Prefabricated roller-shutter casing for exterior and interior walls, having at least one base panel (4) and a plaster base (3) for a plaster (15) which is to be applied subsequently, **characterized in that** the plaster base (3) has a coating (6) which comprises a mixture applied in liquid or pasty form, and made of a binder and short fibres, and forms a rough, hard and stable carrying layer.

8. Roller-shutter casing according to Claim 7, **characterized in that** the binder is formed as a dispersion.

9. Roller-shutter casing according to Claim 7 or 8, **characterized in that** the coating (6) is formed as a spray coating.

10. Roller-shutter casing according to Claim 7, 8 or 9, **characterized in that** the coating (6) has natural fibres of cotton, flax, hemp or the like.

11. Roller-shutter casing according to one of Claims 7 to 10, **characterized in that** the coating (6) has plastic fibres.

12. Roller-shutter casing according to Claim 10 or 11, **characterized in that** the coating (6) has a mixture of different fibres.

13. Roller-shutter casing according to one of Claims 7 to 12, **characterized in that** the coating (6) is applied directly to an insulating layer (4).

14. Roller-shutter casing according to one of Claims 7 to 13, **characterized in that** the coating (6) has a supporting grid.

15. Roller-shutter casing according to one of Claims 7 to 14, **characterized in that** the coating (6) has a decoration (10).

## Revendications

1. Procédé de production d'un caisson (1) de volet roulant préfabriqué, pour murs extérieurs et intérieurs à enduire, le caisson (1) de volet roulant préfabriqué comportant au moins une plaque (4) de base et un support (3) d'enduit et étant prévu pour appliquer ultérieurement un enduit (15), **caractérisé en ce qu'**il est appliqué sous forme liquide ou pâteuse comme support (3) d'enduit sur la plaque (4) de base une enduction (6), constituée d'un mélange d'un liant et de fibres courtes, qui forme après la prise une couche porteuse rugueuse, dure et stable.

2. Procédé suivant la revendication 1, **caractérisé en ce qu'**on utilise comme liant une dispersion.

3. Procédé suivant la revendication 1 ou 2, **caractérisé en ce que** l'enduction (6) est appliquée au pistolet.

4. Procédé suivant la revendication 3, **caractérisé en ce que** l'enduction (6) est appliquée au pistolet avec une haute pression de 10 bars ou plus, de préférence de 15 bars ou plus.

5. Procédé suivant l'une des revendications 1 à 4, **caractérisé en ce que** l'enduction (6) est directement appliquée sur une couche (4) isolante d caisson (1) de volet roulant.

6. Procédé suivant l'une des revendications 1 à 5, **caractérisé en ce que** l'enduction (6) est mélangée dans un mélangeur à haute fréquence.

7. Caisson de volet roulant préfabriqué pour murs extérieurs et intérieurs à enduire, comportant au moins une plaque (4) de base et un support (3) d'enduit pour un enduit (15) à appliquer ultérieurement, **caractérisé en ce que** le support (3) d'enduit comprend une enduction (6), qui est constituée d'un mélange d'un liant et de fibres courtes appliqué sous forme liquide ou pâteuse, et qui forme une couche porteuse rugueuse, dure et stable.

8. Caisson (1) de volet roulant suivant la revendication 7, **caractérisé en ce que** le liant est réalisé sous forme de dispersion.

9. Caisson (1) de volet roulant suivant la revendication 7 ou 8, **caractérisé en ce que** l'enduction (6) est réalisée sous forme de revêtement appliqué au pistolet.

10. Caisson (1) de volet roulant suivant la revendication 7, 8 ou 9, **caractérisé en ce que** l'enduction (6) comporte des fibres naturelles de coton, lin, chanvre ou analogue.

11. Caisson (1) de volet roulant suivant l'une des revendications 7 à 10, **caractérisé en ce que** l'enduction (6) comporte des fibres de matière plastique.

12. Caisson (1) de volet roulant suivant la revendication 10 ou 11, **caractérisé en ce que** l'enduction (6) comporte un mélange de fibres différentes.

13. Caisson (1) de volet roulant suivant l'une des revendications 7 à 12, **caractérisé en ce que** l'enduction (6) est directement appliquée sur une couche (4) isolante.

14. Caisson (1) de volet roulant suivant l'une des revendications 7 à 13, **caractérisé en ce que** l'enduction (6) comporte une grille (11) de soutien.

15. Caisson (1) de volet roulant suivant l'une des revendications 7 à 14, **caractérisé en ce que** l'enduction (6) comporte une décoration (10).
